Europäisches Patentamt

European Patent Office

Office européen des brevets

(19)

(11) Publication number: **0 259 131 B1**

(12)

# EUROPEAN PATENT SPECIFICATION

(45) Date of publication of patent specification: **13.11.91**  (51) Int. Cl.⁵: **B60B 33/02**

(21) Application number: **87307682.2**

(22) Date of filing: **28.08.87**

(54) A castor.

(30) Priority: **29.08.86 GB 8620924**

(43) Date of publication of application:
**09.03.88 Bulletin 88/10**

(45) Publication of the grant of the patent:
**13.11.91 Bulletin 91/46**

(84) Designated Contracting States:
**AT BE DE FR GB IT NL SE**

(56) References cited:
**DE-A- 1 918 357**

(73) Proprietor: **FLEXELLO CASTORS & WHEELS P.L.C.**
**268 Bath Road**
**Slough Berkshire SL1 4ED(GB)**

(72) Inventor: **Walker, Phillip Stuart**
**Park View Wexham Park Lane**
**Wexham Slough Berkshire(GB)**
Inventor: **Pryce, David**
**12 The Greenway Tylers Green**
**Nr High Wycombe Buckinghamshire(GB)**
Inventor: **Moxey, Peter James**
**10 Scott Close West Drayton**
**Middlesex UB7 9DX(GB)**
Inventor: **White, Tony Reginald William**
**"Chestnut"**
**The Avenue Sheephouse Road**
**Maidenhead Berkshire(GB)**

(74) Representative: **Everitt, Christopher James Wilders et al**
**F.J. CLEVELAND & COMPANY 40/43 Chancery Lane**
**London WC2A 1JQ(GB)**

Rank Xerox (UK) Business Services

## Description

This invention relates to a castor comprising a wheel which is journalled on an axle in a fork which is arranged for swivelling movement about an axis which is normal to the axis of the axle and which is provided with a pedal operable brake for the wheel, the pedal operable brake being carried by the fork and being operable to put a braking element into braking engagement with the circumferential periphery of the wheel when it is applied.

GB-A-1231381 and DE-A-1918357 (corresponding to the preamble of claim 1) disclose examples of such castors provided with a releasable latching arrangement operable to latch the brake applied to the wheel, the latching arrangement comprising a leaf spring which is stressed by movement of the pedal to apply the brake and which urges the pedal to release the brake, the leaf spring extending above the wheel substantially parallel to the path the wheel traces as it rolls and being releasably held by interengagement of a strut portion carried by the leaf spring with an abutment carried by the fork until released by dislodgement of the strut portion to free the pedal and release the brake. In the arrangements disclosed in both these references, the releasable latching arrangement is vulnerable to accidental release as the abutment surface engaged by the end of the strut element when the brake is applied is part of a flat surface.

An object of this invention is to provide a castor with improved releasable latching means.

According to this invention there is provided a castor comprising a wheel which is journalled on an axle in a fork which is arranged for swivelling movement about an axis which is normal to the axis of the axle, the fork carrying a pedal operable brake for the wheel which is operable to put a braking element into braking engagement with the circumferential periphery of the wheel when it is applied, the pedal operable brake comprising a pedal and including a releasable latching arrangement comprising a leaf spring which extends above the wheel substantially parallel to the path the wheel traces as it rolls, which interacts with the pedal and the fork so that it is flexed from its natural flat relaxed condition when the pedal is depressed to apply the brake, and which is releasably held so flexed by interengagement of a strut portion carried by the leaf spring with an abutment carried by the fork to hold the leaf spring flexed from its natural relaxed condition and the brake applied until the strut portion is dislodged from engagement with the abutment to free the pedal and release the brake by the action of the return of the leaf spring to its natural flat relaxed condition, wherein the abutment is formed in a recess in a surface along which an edge of the strut portion remote from the leaf spring is caused to slide as the pedal is depressed, the edge of the strut portion being snapped into the recess and thus into engagement with the abutment at the end of the brake applying movement of the pedal whereby the edge of the strut portion is positively located in engagement with the abutment by the recess.

Conveniently the braking element is a sprag formed by a respective tongue which is integral with the leaf spring and which depends from the leaf spring towards the wheel. The sprag may be one of an opposed pair of such sprags which converge towards the wheel for braking rotation of the wheel in either direction.

Preferably the leaf spring has a protuberance which is adapted to engage an aligned one of a circumferential array of corresponding recesses formed in a hub assembly upon which the fork is journalled for swivelling movement about the axis which is normal to the axis of the wheel axle, the protuberance being spaced from the recesses in the hub assembly when the leaf spring is in its natural flat relaxed condition and being urged in a direction which is substantially parallel to the axis of the hub assembly into engagement with the aligned one of the recesses in the hub assembly by the action of deforming the leaf spring to apply the brake, so that the fork is locked against swivelling movement about the axis that is normal to the axis of the wheel axle when the brake is applied.

The leaf spring may be forked at an end remote from the pedal, the forked end forming two spaced integral prong portions which engage the fork. The protuberance may be formed in an integral projecting portion of the leaf spring which projects between the two prongs. Alternatively the leaf spring may react against the fork at an end remote from the pedal, the protuberance being formed in the leaf spring between said end and the pedal. Conveniently the protuberance is one of a pair of such protuberances which are formed in the leaf spring symmetrically on either side of the longitudinal axis of the leaf spring. In such an alternative arrangement, the part of the leaf spring that reacts against the fork at said end and the two protuberances may be circumferentially spaced around an annular portion of the leaf spring through which the axis of the hub assembly passes.

Preferably the abutment is formed in a release lever which is pivotally mounted on the fork and which is urged into abutment with the fork by the action of the stressed leaf spring acting through the strut element that is engaged with the abutment, the arrangement being such that the release level can be pivoted relative to the fork to dislodge the strut element from engagement with the abutment and thereby to release the stressed leaf spring for return movement to its natural flat condition. Conveniently the release level is a secondary pedal.

In one arrangement the release lever is pivotally mounted on a pivot carried by a side portion of the fork and is urged into abutment with a surface on the bridge piece of the fork by the action of the stressed leaf spring acting through the strut element that is engaged with the abutment, the pivot being engaged within a corresponding recess which is formed in the release lever so that it is open on one side, the arrangement being such that the pivot is disengaged from the corresponding recess by pivotal movement of the release lever about said surface cf the fork whereby to allow the strut element to be displaced from engagement with the abutment and thereby to release the stressed leaf spring for return movement to its natural flat relaxed condition, the release lever being resorted to its normal position in abutment with said surface and with the pivot engaged within the corresponding open sided recess due to the action of the leaf spring as it returns to its normal flat relaxed condition. In an alternative arrangement the release lever is hinged to the bridge piece of the fork by the engagement of hinge elements which project from the release lever through corresponding apertures formed in the bridge piece.

One form of castor having a pedal brake and in which this invention is embodied, and a modification of that castor are described now by way of example with reference to the accompanying drawings, of which:-

Figure 1 is a plan view of the castor;
Figure 2 is a partly sectioned side elevation of the castor, the section being on the line II-II in Figure 1, the castor being shown with the brake released;
Figure 3 is a view of the castor, from below as seen in Figure 2, with the wheel and its axle removed to show hidden detail;
Figure 4 is an end elevation of the castor as seen from the right in Figure 2;
Figure 5 is a sectioned detail of Figure 4 drawn to a larger scale;
Figure 6 is a view smaller to Figure 2 but showing the pedal brake applied;
Figure 7 is a section on the line VII-VII in Figure 1 of the release level;
Figure 8 is a detail of Figure 6 drawn to a larger scale and sectioned on the line VIII-VIII in Figure 1;
Figure 9 is a partly-sectioned side elevation, similar to Figure 2, but with the hub assembly in elevation and showing a modified form of the leaf spring and of the release lever;
Figure 10 is a fragmentary view similar to that of the corresponding part of Figure 3 showing the modification to the leaf spring illustrated in Figure 9; and
Figure 11 is a fragmentary view, similar to the corresponding part of Figure 6, showing the modified leaf spring and release lever shown in Figure 9, when the brake is applied.

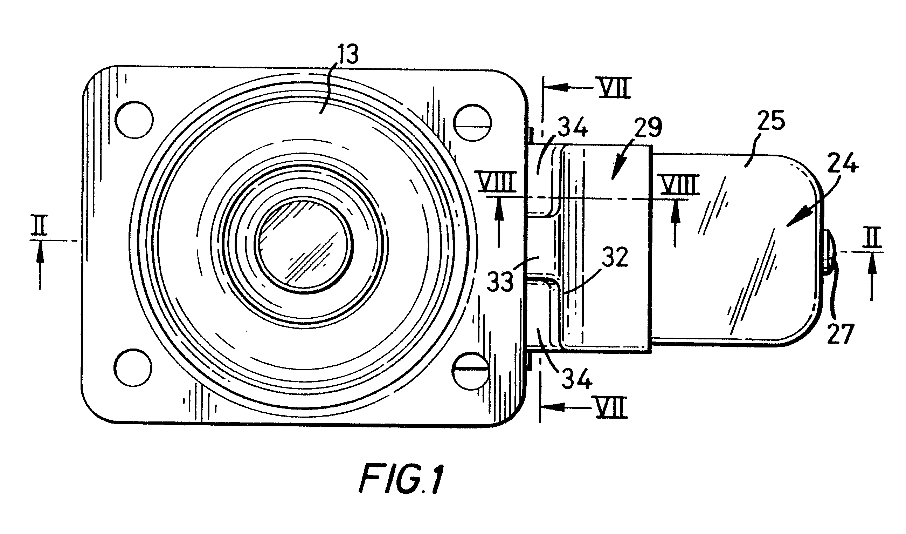

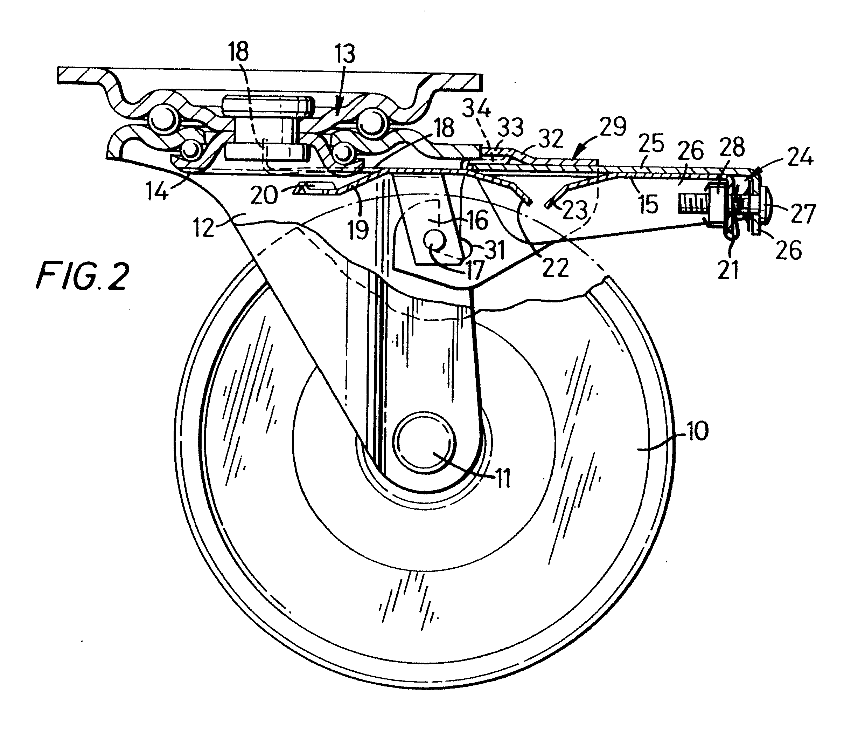

Figures 1 to 8 of the drawings show a castor comprising a wheel 10 which is journalled on an axle 11 in a fork 12. The fork 12 is an inverted U comprising two triangular side portions depending from either side of a connecting body piece. The latter, which is referred to from now on as the bridge, is formed with an aperture which receives a hub assembly 13. The hub assembly 13 includes a double rolling bearing (see Figure 2) by which the fork 12 is arranged for swivelling movement about the axis of the hub assembly 13 which is normal to but laterally offset from the axis of the axle 11.

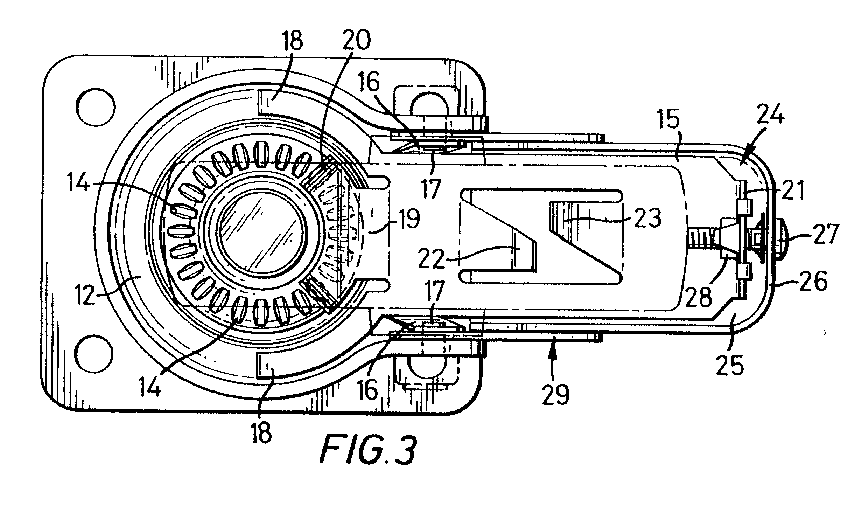

The underside of the hub assembly 13 is formed with a circumferential array of recesses 14 (see Figure 3).

A leaf spring 15 extends between the wheel 10 and the underside of the bridge of the fork 12 in a direction which is substantially parallel to the path the wheel 10 traces as it rolls. A major part of the leaf spring 15 is flat in its normal relaxed condition. Two legs 16 depend from the leaf spring 15, one on either side. Each leg 16 is journalled on a respective pivot peg 17 which projects from the inner face of a respective one of the side portions of the fork 12 towards the other side portion of the fork 12 (see Figure 5). Figure 3 shows that the end of the leaf spring 15 that is nearer to the hub assembly 13 is forked to form two spaced prongs 18, one on either side of the lower portion of the hub assembly 13 that projects below the bridge of the fork 12. Each prong 18 has an upstanding angled end piece (see Figure 2) which engages the underside of the bridge of the fork 12. The leaf spring 15 also has an integral central portion 19 which projects between the two prongs 18. The central portion 19 is cranked to form a dog leg, the toe end of which is below the prongs 18. Two upwardly-projecting protuberances 20 are formed in the central portion 19 at substantially the same radial distance from the axis of the hub assembly 13 as the circumferential array of recesses 14, and are spaced apart angularly by substantially the same arc as two of the recesses 14 which are separated, conveniently by five other of the recesses 14. Each protuberance 20 is sized and shaped to seat neatly in a respective one of the recesses 14. There is a depending flange 21 at the end of the leaf spring 15 remote from the prongs 18.

Two tongues 22 and 23, which are integral with the leaf spring 15, are formed by cut outs in the leaf spring 15, between the legs 16 and the flange 21. The tongues 22 and 23 depend from the remainder of the leaf spring 15, converge towards one another, each being in the form of a dog leg, and serve as sprag brakes which are operable to be urged into engagement with the circumferential periphery of the wheel 10 whereby to retard rotation of the wheel 10 in either direction.

A sheet metal pedal 24 comprises a flat main portion 25 and an integral flange 26 which depends from the sides and one end of the main portion 25 to form a U in plan as seen in Figure 3. An adjustment screw 27 is captive in the portion of the flange 26 at the end of the main portion 25, and has its threaded stem extending through an aperture in the flange 21 into engagement with a nut 28 which is clipped to the flange 21. The main portion 25 extends over the leaf spring 15· to a location between the legs 16 and the tongues 22 and 23. The width of the main portion 25 exceeds the width of the leaf spring 15 and of the tread of the wheel 10 so that the portions of the flange 26 that depend from the sides of the main portion 25 extend on either side of both of the leaf spring 15 and part of the wheel 10 (see Figures 2 and 6).

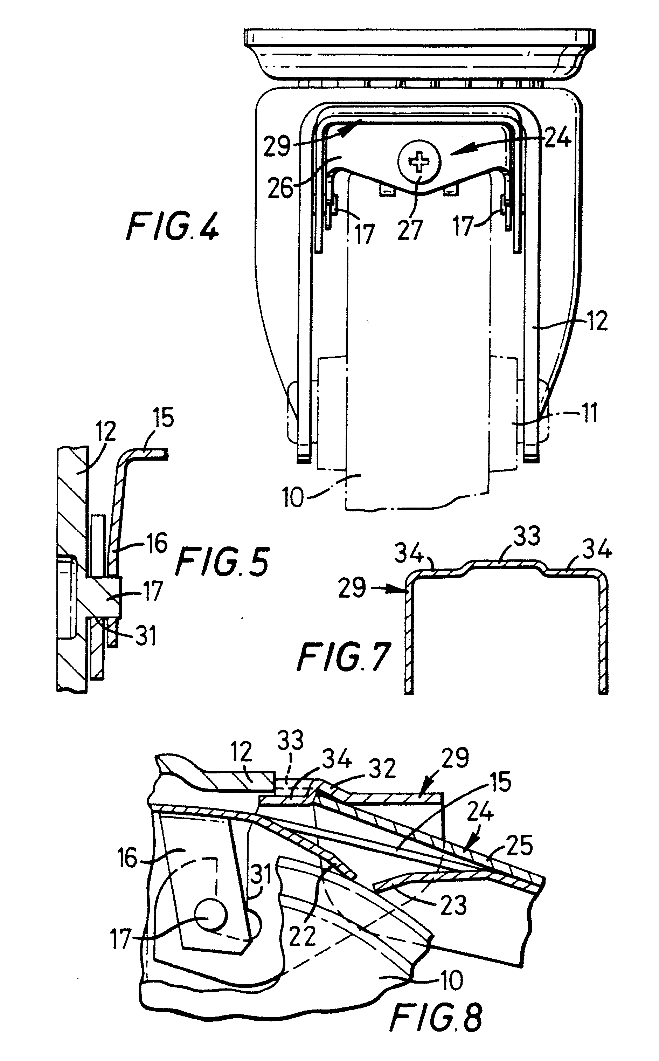

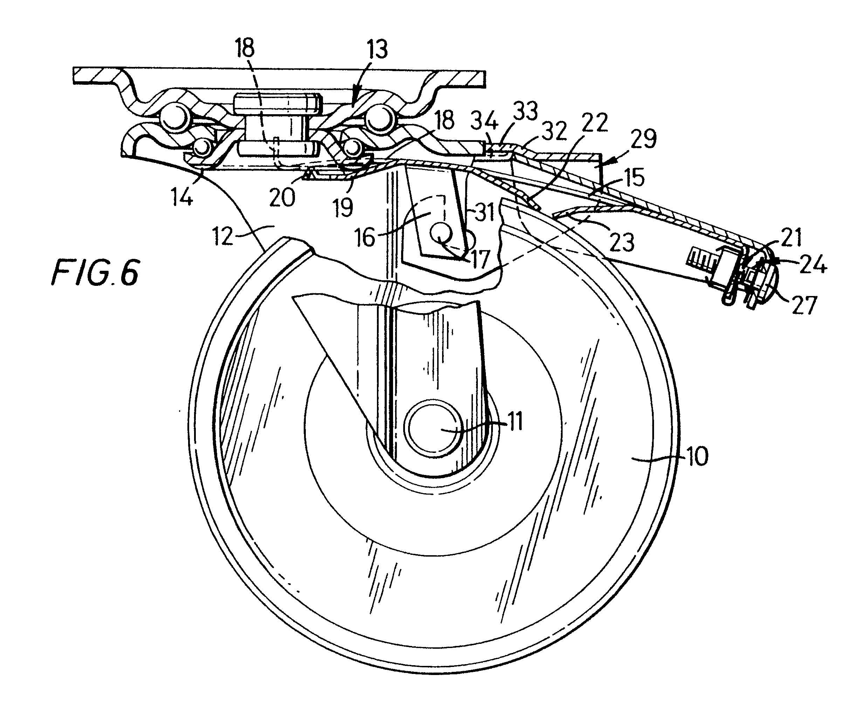

A sheet metal release lever 29 which, like the fork 12, has an inverted U-shape (see Figure 7), extends over the pedal 24 at the end of the latter that is nearer to the hub assembly 13, the side portions of the lever 29 extending one on either side of the pedal 24 and towards the axis of the hub assembly 13 below the latter. Each side portion of the lever 29 has a T-shaped recess 31 formed in it, the two arms of the T-shaped recess 31 being at the bottom of the recess 31 and having arcuate ends. In the conditions shown in Figures 2 and 6, the arcuate end of the arm of each T-shaped recess 31 that is nearer to the hub assembly 13 receives the pivot pin 17 that the respective leg 16 of the leaf spring 15 is journalled upon. The medial portion of the release lever 29 rests on top of the pedal 24. It has a lateral fold 32 between its ends, the fold 32 forming an upstanding ridge in its upper surface and a complementary trough in its underside, the ridge and trough extending from side to side of the medial portion. The part of the medial portion between the fold 32 and the hub assembly 13 has a top hat section, the raised central portion 33 being in abutment with the adjacent edge of the bridge of the fork 12. The spaced lower flat side portions 34 of the top hat section portion project into the gap between the wheel 10 and the bridge of the fork 12 with a clearance between them and the bridge (see Figure 8).

In the brake released condition shown in Figure 2, the leaf spring 15 is in its flat relaxed state, the sprag brake tongues 22 and 23 are displaced from the wheel rim and the protuberances 20 at the end of the leaf spring central portion 19 are displaced from the aligned recesses 14 formed in the hub assembly 13.

To apply the brake, an operator puts his foot on the end of the pedal 24 remote from the hub assembly 13. The leaf spring 15 is bowed as shown in Figure 6, the prongs 18 reacting against the underside of the connecting body piece, and the protuberances 20 are urged into engagement each with an aligned one of the recesses 14 whereby the fork 12 is locked against swivelling movement relative to the hub assembly 13. At the same time the sprag brake tongues 22 and 23 are urged into braking engagement with the wheel 10 so that the wheel 10 is held against rotation in either direction. Also the edge of the main portion 25 of the pedal 24 at the end which is not flanged is caused to slide along the underside of the two side portions 34 of the release lever 29, away from the fork 12, until it is snapped into the trough formed by the underside of the fold 32, as shown in Figure 8. The flat main portion 25 of the pedal 24 serves as a strut so that, when engaged with the spaced abutments formed by the portions of the fold 34 that flank the raised central portion 33, it holds the leaf spring 15 bowed, as shown in Figure 6.

To release the brake, the operator puts his foot on the end of the release lever 29 that is further from the fork 12 so that the release lever 29 is pivotted about the end surface of the fork bridge with which it is in abutment. The pivot pins 17 are disengaged from the respective arcuate ends of the arms of the T-shaped recesses 31 with which they were engaged as shown in Figures 2 and 6. Engagement of the edge of the trough remote from the top hat section portion of the release lever 29 with the flat main portion 25 of the pedal 24 displaces the pedal 24 from the trough. Hence the leaf spring 15 is released to return to its normal flat condition as shown in Figure 2 to which it is urged in reaction to the engagement of the prongs 18 against the underside of the bridge.

The relative positioning of the pedal 24 and the release lever 29 can be adjusted by operation of the adjustment nut and screw mechanism 27 and 28.

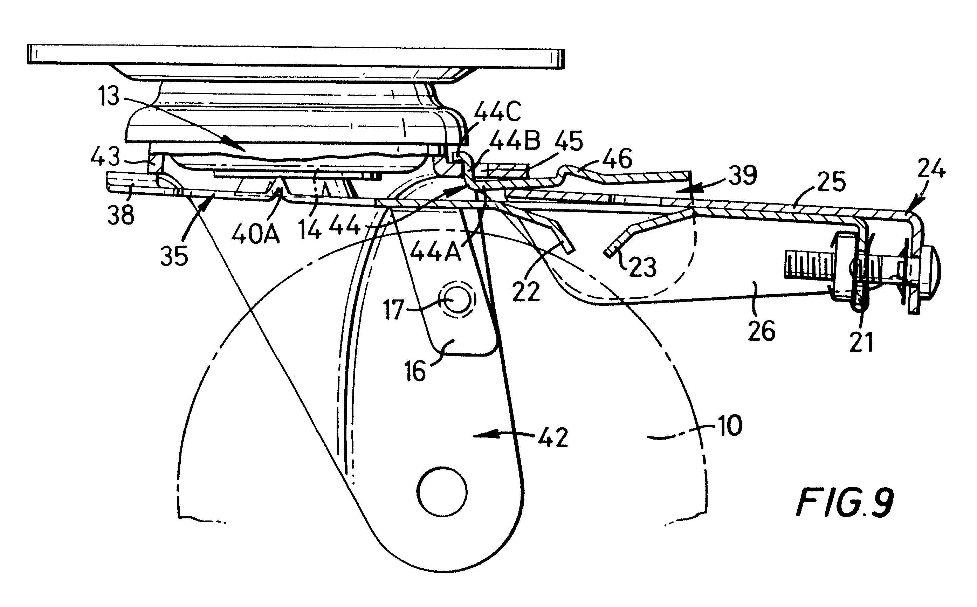

Figures 9 to 11 show a modified form of the castor shown in Figures 1 to 8. Parts of the castor shown in Figures 9 to 11, which are similar to corresponding parts of the castor shown in Figures 1 to 8, are identified by the same reference numeral as is used in Figures 1 to 8. The modifications are to the part of the leaf spring 35 that is in the region of the hub assembly 13, to the release lever 39 and to the pivoted association of the release lever 39 with the bridge of the fork 42.

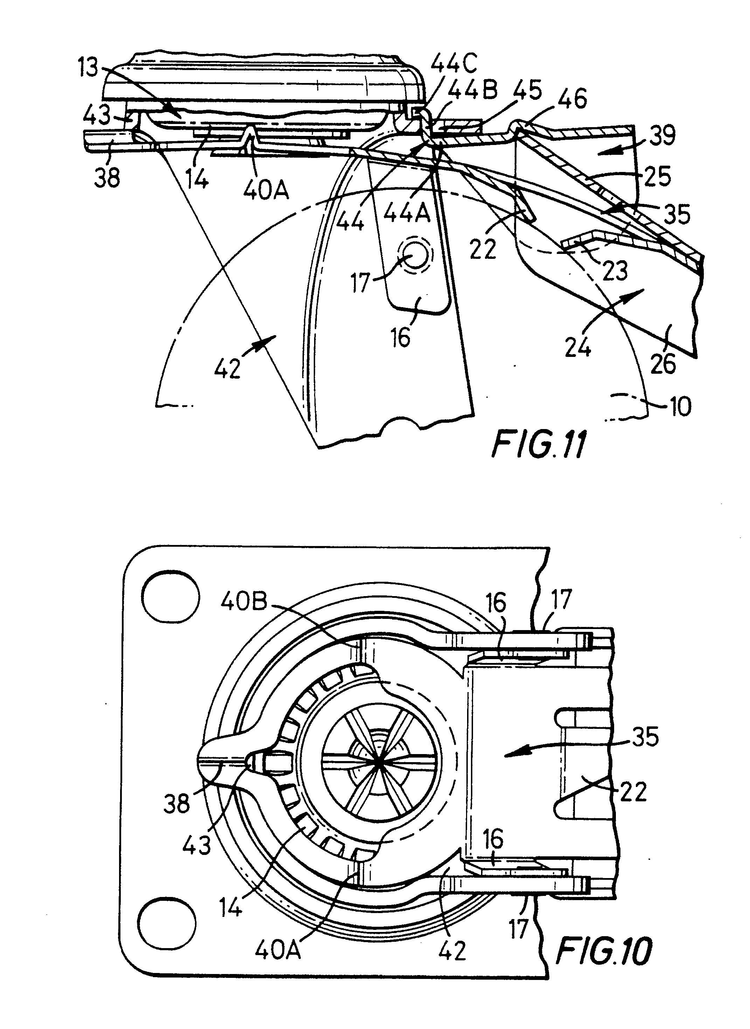

Figure 10 shows the part of the leaf spring 35 that is in the region of the hub assembly 13 is annular, having a central aperture through which the axis of the hub assembly 13 passes. The annular portion of the leaf spring 35 is symmetrical about the longitudinal axis of the leaf spring 35 which intersects the axis of the hub assembly 13. It replaces the two spaced prongs 18 and the integral central portion 19 of the leaf spring 15 shown in Figures 1 - 8.

The annular portion of the leaf spring 35 is deformed by pressing at three circumferentially spaced locations to form three upwardly projecting protuberances 38, 40A and 40B.

The protuberance 38 is located centrally at the end of the leaf spring 35 remote from the pedal 24. It extends below and projects radially outwardly beyond the adjacent rim portion of the bridge of the fork 42 which it engages, thereby serving the same functions as the upstanding angled end pieces of the prongs 18 of the castor shown in Figures 1 - 8.

The protuberances 40A and 40B, which are on diametrically opposite sides of the annular portion of the leaf springs 35, are intended to cooperate with the circumferential array of recesses 14 in basically the same way as do the protuberances 20 of the castor shown in Figures 1 - 8.

Figures 9 and 11 shows the release lever 39 is hinged to the bridge of the fork 42 instead of being interengaged with the pivot pins 17 and pivoted about the adjacent edge of that bridge as in the castor shown in Figures 1 - 8. The release lever 39, which, like the release lever 29, has an inverted U-shape and extends over the pedal 24, has two integral hinge elements 44 which project from it at its end adjacent the fork 42.

Each hinge element 44 is stepped, comprising a root portion 44A which extends from the medial portion of the major U-shaped portion of the release lever 39 below the adjacent rim portion of the bridge of the fork 42, an intermediate portion 44B which extends with clearance up through a respective aperture 45 in the bridge of the fork 42, and an end portion 44C which extends towards the hub assembly 13 above the bridge of the fork 42. The depth of each aperture 45 is sufficiently less than the height of the respective intermediate hinge element portion 44B to allow a limited amount of angular movement of the release lever 29 relative to the fork 42 about the hinge between them. The medial portion of the release lever 39 has a lateral fold 46 between its ends, the fold 46 forming an upstanding ridge in its upper surface and a complementary trough in its underside, the ridge and the trough extending from side to side of the medial portion.

In the brake released condition shown in Figure 9, the leaf spring 35 is in its flat relaxed state, the sprag brake tongues 22 and 23 are displaced from the wheel rim and the protuberances 40A and 40B are displaced from the aligned recesses 14 formed in the hub assembly 13. The leaf spring 35 reacts against the rim portion 43 of the bridge of the fork 42 to hold the pedal 24 in its brake released location. The release lever 39 rests on the pedal 24 at the end of the latter that is adjacent to the hub assembly 13, the medial portion of the release lever 39 and the flat main portion 25 of the pedal 24 diverging away from that end and forming a tapered space between them. The angle between the end portion 44C and the intermediate portion 44B of each of the hinge elements 44 rests on the step formed by the top of the bridge of the fork 42 and the inner surface of the respective aperture 45. The medial portion of the lever 39 is at an angle to the bridge of the fork 42 sloping upwardly from the root portions 44A of the hinge elements 44 to pass close to, or touch the edge of the bridge of the fork 42.

To apply the brake, an operator puts his foot on the end of the pedal 24 remote from the assembly 13. The leaf spring 35 is bowed in much the same way as is shown in Figure 6 for the leaf spring 15, the protuberance 38 reacting against the rim portion 43 of the fork bridge, and the protuberances 40A and 40B are urged into engagement, each with an aligned one of the recesses 14 (see Figure 11) whereby the fork 42 is locked against swivelling movement relative to the hub assembly 13. At the same time the sprag brake tongues 22 and 23 are urged into braking engagement with the wheel so that the wheel is held against rotation in either direction. Also the edge of the main portion 25 of the pedal 24 at the end which is not flanged is caused to slide along the underside of the medial portion of the release lever 39, away from the fork 42, until it is snapped into the trough formed by the underside of the fold 46, in substantially the same way as is shown in Figure 6 for engagement of the pedal in the fold 42 of the release lever 29.

To release the brake, the operator puts his foot on the end of the release lever 39 that is further from the fork 42 so that the release lever 39 is pivotted about the inner edges of the apertures 45. Engagement of the edge of the trough remote from the hub assembly 13 with the flat main portion 25 of the pedal 24 displaces the pedal 24 from the trough. Hence the leaf spring 35 is released to return to its normal flat condition as shown in Figure 9 to which it is urged in reaction to the engagement of the protrusion 38 with the bridge piece rim portion 43.

The pivot pegs 17 are difficult and costly to make. It has been proposed that split, hardened spring steel tubes might be used as such pivot pins 17, each tube being spigotted into a respective aperture in the respective side portion of the fork 12 or 42 and being held in that location by a suitable locking washer. Alternatively, the pivot pins may be formed integrally with the legs of the spring as outwardly directed spigots each of which is urged by the resilience of the respective leg of the spring into a corresponding hole which is formed in the respective side portion of the fork. As can be understood from Figures 3 and 4, the holes would be formed in the parts of the side portions of the fork that are spaced from one another by the smallest distance and that are parallel to one another. During assembly, the spring may be presented to the fork with its legs between the curved parts of the side portions. The spring would then be moved to bring the legs into the gap between the parallel parts of the side portions. During that movement the legs would be deflected towards one another by the interaction between the spigot projections and the inner surfaces of the fork which function as opposed, convergent ramps. The spring would be guided to align each spigot projection with the respective hole so {hat each of them is sprung into its hole.

## Claims

1. A castor comprising a wheel (10) which is journalled on an axle (11) in a fork (12, 42) which is arranged for swivelling movement about an axis which is normal to the axis of the axle (11), the fork carrying a pedal operable brake for the wheel which is operable to put a braking element (22, 23) into braking engagement with the circumferential periphery of the wheel (10) when it is applied, the pedal operable brake comprising a pedal (24) and including a releasable latching arrangement comprising a leaf spring (15, 35) which extends above the wheel (10) substantially parallel to the path the wheel (10) traces as it rolls, which interacts with the pedal (24) and the fork (12, 42) so that it is flexed from its natural flat relaxed condition when the pedal (24) is depressed to apply the brake, and which is releasably held so flexed by interengagement of a strut portion (25) carried by the leaf spring (15, 35) with an abutment carried by the fork (12, 42) to hold the leaf spring (15, 35) flexed from its natural relaxed condition and the brake applied until the strut portion (25) is dislodged from engagement with the abutment to free the pedal (24) and release the brake by the action of the return of the leaf spring (15, 35) to its natural flat relaxed condition, characterised in that the abutment is formed in a recess in a surface along which an edge of the strut portion (25) remote from the leaf spring (15, 35) is caused to slide as the pedal (24) is depressed, the edge of the strut portion (25) being snapped into the recess and thus into engagement with the abutment at the end of the brake applying movement of the pedal (24) whereby the edge of the strut portion (25) is positively located in engagement with the abutment by the recess.

2. A castor according to claim 1, wherein the braking element is a sprag (22, 23) formed by a respective tongue which is integral with the leaf spring (15, 35) and which depends from the leaf spring (15, 35) towards the wheel (10).

3. A castor according to claim 2, wherein the sprag is one of an opposed pair of such sprags (22, 23) which converge towards the wheel (10) for braking rotation of the wheel (10) in either direction.

4. A castor according to any one of claims 1 to 3, wherein the leaf spring (15, 35) has a protuberance (20, 40A, 40B) which is adapted to engage an aligned one of a circumferential array of corresponding recesses (14) formed in a hub assembly (13) upon which the fork (12, 42) is journalled for swivelling movement about the axis which is normal to the axis of the wheel axle (11), the protuberance (20, 40A, 40B) being spaced from the recesses (14) in the hub assembly when the leaf spring (15, 35) is in its natural flat relaxed condition and being urged in a direction which is substantially parallel to the axis of the hub assembly (13) into engagement with the aligned one of the recesses (14) in the hub assembly (13) by the action of deforming the leaf spring (15, 35) to apply the brake, so that the fork (12, 42) is locked against swivelling movement about the axis that is normal to the axis of the wheel axle (11) when the brake is applied.

5. A castor according to claim 4, wherein the leaf spring (15) is forked at an end remote from the pedal (24), the forked end forming two spaced integral prong portions (18) which engage the fork (12).

6. A castor according to claim 5, wherein the protuberance (20) is formed in an integral projecting portion (19) of the leaf spring (15) which projects between the two prong portions (18).

7. A castor according to claim 4, wherein the leaf spring (35) reacts against the fork (42) at an end remote from the pedal (24) and the protuberance (40A, 40B) is formed in the leaf spring (35) between said end and the pedal (24).

8. A castor according to claim 7, wherein the protuberance is one of a pair of such protuberances (40A and 40B) which are formed in the leaf spring (35) symmetrically on either side of the longitudinal axis of the leaf spring (35).

9. A castor according to claim 8, wherein the part of the leaf spring (35) that reacts against the fork (42) at said end and the two protuberances (40A and 40B) are circumferentially spaced around an annular portion of the leaf spring (35), the annular portion having a central aperture through which the axis of the hub assembly (13) passes.

10. A castor according to any one of claims 1 to 9, wherein the abutment is formed in a release lever (29, 39) which is pivotally mounted in the fork (12, 42) and which is urged into abutment with the fork (12, 42) by the action of the stressed leaf spring (15, 35) acting through the strut element (25) that is engaged with the abutment, the arrangement being such that the release lever (29, 39) can be pivoted relative to the fork (12, 42) to dislodge the strut element (25) from engagement with the abutment and thereby to release the stressed leaf spring (15, 35) for return movement to its natural flat relaxed position.

11. A castor according to claim 10, wherein the release lever (29, 39) is a secondary pedal.

12. A castor according to claim 10 or claim 11, wherein the release lever (29) is pivotally mounted on a pivot (17) carried by a side portion of the fork (12) and is urged into abutment with a surface on the bridge piece of the fork (12) by the action of the stressed leaf spring (15) acting through the strut element (25) that is engaged with the abutment, the pivot (17) being engaged within a corresponding recess (31) which is formed in the release lever (29) so that it is open on one side, the arrangement being such that the pivot (17) is disengaged from the corresponding recess (31) by pivotal movement of the release lever (29) about said surface of the fork (12) whereby to allow the strut element to be displaced from engagement with the abutment and thereby to release the stressed release spring (15) for return movement to its natural flat relaxed condition, the release lever (29) being restored to its normal position in abutment with said surface and with the pivot (17) engaged within the corresponding open sided recess (31) due to the action of the leaf spring (15) as it returns to its normal flat relaxed condition.

13. A castor according to claim 10 or claim 11, wherein the release lever (39) is hinged to the bridge piece of the fork (42) by the engagement of hinge elements (44) which project from the release lever (39) through corresponding apertures (45) formed in the bridge piece.

**Revendications**

1. Roulette à pivot comportant une roue (10) qui tourne sur un tourillon (11) dans une fourche (12, 42) qui est agencée pour pivoter autour d'un axe qui est perpendiculaire à l'axe du tourillon (11), la fourche portant un frein de roue actionné par pédale qui peut être actionné de façon à mettre un élément de freinage (22, 23) en engagement de freinage avec la périphérie circonférentielle de la roue (10) lorsqu'il est appliqué, le frein actionné par pédale comportant une pédale (24) et comprenant un agencement de verrouillage libérable comportant un ressort à lame (15, 35) qui s'étend audessus de la roue (10) sensiblement parallèlement à la trajectoire que la roue (10) suit lorsqu'elle roule, qui interagit avec la pédale (24) et la fourche (12, 42) de telle sorte qu'il est fléchi en partant de son état détendu naturel à plat lorsque la pédale (24) est enfoncée pour appliquer le frein, et qui est maintenu de façon libérable ainsi fléchi par engagement mutuel d'une partie de bras (25) portée par le ressort à lame (15, 35) avec une butée portée par la fourche (12, 42) afin de maintenir le ressort à lame (15, 35) fléchi en partant de son état détendu naturel et le frein appliqué jusqu'à ce que la partie de bras (25) soit délogée de l'engagement avec la butée de façon à libérer la pédale (24) et relâcher le frein par l'action de rappel du ressort à lame (15, 35) vers son état détendu naturel à plat, caractérisée en ce que la butée est formée dans un renfoncement dans une surface le long de laquelle un bord de la partie de bras (25) éloignée du ressort à lame (15, 35) est amené à glisser lorsque la pédale (24) est enfoncée, le bord de la partie de bras (25) étant encliquetée dans le renfoncement et ainsi en engagement avec la butée à la fin du mouvement de la pédale appliquant le frein (24), le bord de la partie de bras (25) étant positionné de manière positive en engagement avec la butée par le renfoncement.

2. Roulette selon la revendication 1, dans laquelle l'élément de freinage est un sabot (22, 23) formé par une languette respective qui fait partie intégrante du ressort à lame (15, 35) et qui retombe depuis le ressort à lame (15, 35) en direction de la roue (10).

3. Roulette selon la revendication 2, dans laquelle le sabot est un sabot d'une paire de sabots opposés (22, 23) qui convergent en direction de la roue (10) afin de freiner la rotation de la roue (10) dans chaque direction.

4. Roulette selon l'un quelconque des revendications 1 à 3, dans laquelle le ressort à lame (15, 35) possède une protubérance (20, 40A, 40B) qui est prévue pour engager un renfoncement aligné d'une rangée circonférentielle de renfoncements correspondants (14) formés dans un assemblage de moyeu (13) sur lequel tourillonne la fourche (12, 42) pour un mouvement de pivotement autour de l'axe qui est perpendiculaire à l'axe du tourillon de la roue (11), la protubérance (20, 40A, 40B) étant espacée des renfoncements (14) dans l'assemblage de moyeu lorsque le ressort à lame (15, 35) est dans son état détendu naturel à plat et étant poussée dans une direction qui est sensiblement parallèle à l'axe de l'assemblage de moyeu (13) en engagement avec le renfoncement aligné des renfoncements (14) dans l'assemblage de moyeu (13) sous l'action de la déformation du ressort à lame (15, 35) de façon à appliquer le frein, de telle sorte que la fourche (12, 42) est bloquée à l'encontre d'un mouvement de pivotement autour de l'axe qui est perpendiculaire à l'axe du tourillon de la roue (11) lorsque le frein est appliqué.

5. Roulette selon la revendication 4, dans laquelle le ressort à lame (15) est fourchu à une extrémité éloignée de la pédale (24), l'extrémité fourchue formant deux parties formant dents espacées d'un seul tenant (18) qui engagent la fourche (12).

6. Roulette selon la revendication 5, dans laquelle la protubérance (20) est formée dans une partie saillante d'un seul tenant (19) du ressort à lame (15) qui dépasse entre les deux parties formant dents (18).

7. Roulette selon la revendication 4, dans laquelle le ressort à lame (35) réagit contre la fourche (42) à une extrémité éloignée de la pédale (24) et la protubérance (40A, 40B) est formée dans le ressort à lame (35) entre ladite extrémité et la pédale (24).

8. Roulette selon la revendication 7, dans laquelle la protubérance est une protubérance d'une paire de protubérances (40A et 40B) qui sont formées dans le ressort à lame (35) de manière symétrique de chaque côté de l'axe longitudinal du ressort à lame (35).

9. Roulette selon la revendication 8, dans laquelle la partie du ressort à lame (35) qui réagit contre la fourche (42) à ladite extrémité et les deux protubérances (40A et 40B) sont espacées de manière circonférentielle autour d'une partie annulaire du ressort à lame (35), la partie annulaire ayant une ouverture centrale à travers laquelle passe l'axe de l'assemblage de moyeu (13).

10. Roulette selon l'un quelconque des revendications 1 à 9, dans laquelle la butée est formée dans un levier de libération (29, 39) qui est monté de façon pivotante sur la fourche (12, 42) et qui est poussé en butée avec la fourche (12, 42) sous l'action du ressort à lame tendu (15, 35) agissant par l'intermédiaire de l'élément de bras (25) qui est engagé avec la butée, l'agencement étant tel que le levier de libération (29, 39) peut pivoter par rapport à la fourche (12, 42) afin de déloger l'élément de bras (25) de l'engagement avec la butée et libérer ainsi le ressort à lame tendu (15, 35) pour un mouvement de retour vers son état naturel détendu à plat.

11. Roulette selon la revendication 10, dans laquelle le levier de libération (29, 39) est une pédale secondaire.

12. Roulette selon la revendication 10 ou la revendication 11, dans laquelle le levier de libération (29) est monté de façon pivotante sur un pivot (17) porté par une partie latérale de la fourche (12) et est poussé en butée avec une surface sur la pièce de pont de la fourche (12) sous l'action du ressort à lame tendu (15) agissant par l'intermédiaire de l'élément de bras (25) qui est engagé avec la butée, le pivot (17) étant engagé dans un renfoncement correspondant (31) qui est formé dans le levier de libération (29) de telle sorte qu'il est ouvert sur un côté, l'agencement étant tel que le pivot (17) est dégagé du renfoncement correspondant (31) par un mouvement pivotant du levier de libération (29) autour de la dite surface de la fourche (12), permettant à l'élément de bras d'être amené hors d'engagement avec la butée et de libérer ainsi le ressort à lame tendu (15) pour un mouvement de retour vers son état naturel détendu à plat, le levier de libération (29) étant ramené vers sa position normale en butée avec la dite surface et avec le pivot (17) engagé dans le renfoncement ouvert sur le côté correspondant (31) du fait de l'action du ressort à lame (15) lorsqu'il revient vers sou état détendu normal à plat.

13. Roulette selon la revendication 10 ou la revendication 11, dans laquelle le levier de libération (39) est articulé sur la pièce de pont de la fourche (42) par l'engagement des éléments d'articulation (44) qui dépassent du levier de libération (39) à travers des ouvertures correspondantes (45) formées dans la pièce de pont.

**Patentansprüche**

1. Lenkrolle, die ein Rad (10) aufweist, das auf einem Achszapfen (11) in einer Gabel (12, 42) gelagert ist, die eine Schwenkbewegung um eine Achse, die senkrecht zur Achse des Achszapfens (11) ist, ausführen kann, wobei die Gabel eine über ein Pedal bedienbare Bremse für das Rad trägt, die, so funktioniert, daß, wenn gebremst wird, ein Bremselement (22, 23) in Bremseingriff mit dem Außenumfang des Rades (10) gebracht wird, wobei die über ein Pedal bedienbare Bremse ein Pedal (24) aufweist und eine lösbare Einrastanordnung enthält, die eine Blattfeder (15, 35) aufweist, die sich oberhalb des Rades (10) im wesentlichen parallel zu der Bahn erstreckt, der das Rad (10) folgt, wenn es rollt, die derart mit dem Pedal (24) und der Gabel (12, 42) zusammenwirkt, daß sie aus ihrer natürlichen, ebenen, entspannten Lage gebogen wird, wenn das Pedal (24) um zu bremsen gedrückt wird, und die derart gebogen durch das Zusammenwirken eines von der Blattfeder (15, 35) getragenen Strebenteils (25) mit einem von der Gabel (12, 42) getragenen Widerlager lösbar gehalten wird, um die Blattfeder (15, 35) aus ihrer natürlichen, entspannten Lage gebogen und die Bremse im Bremszustand zu halten, bis der Strebenteil (25) aus dem Zusammenwirken mit dem Widerlager herausgenommen wird, um durch die Wirkung der Rückbewegung der Blattfeder (15, 35) in ihre natürliche, ebene, entspannte Lage das Pedal (24) freizugeben und die Bremse zu lösen, dadurch gekennzeichnet, daß das Widerlager in einer Vertiefung in einer Oberfläche gebildet ist, entlang der, eine von der Blattfeder (15, 35) entfernte Kante des Strebenteils (25) zum Gleiten gebracht wird, wenn das Pedal (24) gedrückt wird, wobei am Ende der Bremsbewegung des Pedals (24) die Kante des Strebenteils (25) in die Vertiefung, und somit in Eingriff mit dem Widerlager eingerastet wird, wodurch die Kante des Strebenteils (25) in Eingriff mit dem Widerlager durch die Vertiefung formschlüssig angeordnet wird.

2. Lenkrolle nach Anspruch 1, bei der das Bremselement ein Hemmschuh (22, 23) ist, der von einer jeweiligen Zunge gebildet wird, die mit der Blattfeder (15, 35) einteilig ausgeführt ist und die von der Blattfeder (15, 35) zum Rad (10) hin herabhängt.

3. Lenkrolle nach Anspruch 2, bei der der Hemmschuh einer von zwei entgegengesetzten Hemmschuhe (22, 23) ist, die zum Rad (10) hin konvergieren, um die Drehung des Rades (10) in jeder Richtung zu bremsen.

4. Lenkrolle nach einem der Ansprüche 1 bis 3, bei der die Blattfeder (15, 35) einen Höcker (20, 40A, 40B) hat, der mit einer fluchtenden Vertiefung von einer Umfangsreihe korrespondierender Vertiefungen (14) zusammenwirken kann, die in einer Nabenanordnung (13) geformt sind, auf der die Gabel (12, 42) um die Achse, die senkrecht zur Achse des Achszapfens (11) ist, schwenkbar gelagert ist, wobei der Höcker (20, 40A, 40B), einen Abstand von den Vertiefungen (14) der Nabenanordnung hat, wenn die Blattfeder (15, 35) in ihrer natürlichen, ebenen, entspannten Lage ist, und durch die Wirkung der zum Bremsen durchgeführten Verformung der Blattfeder (15, 35) in eine Richtung, die im wesentlichen parallel zur Achse der Nabenanordnung (13) ist, in Eingriff mit der fluchtenden Vertiefung (14) in der Nabenanordnung (13) gedrückt wird, so daß die Gabel (12, 42), wenn gebremst wird, für eine Schwenkbewegung um die zur Achse des Achszapfens (11) senkrechte Achse gesperrt ist.

5. Lenkrolle nach Anspruch 4, bei der die Blattfeder (15) an einem vom Pedal (24) entfernten Ende gegabelt ist, wobei das gegabelte Ende zwei beabstandete mit der Blattfeder einstückig ausgeführte Zinkenteile (18) bildet, die an der Gabel (12) angreifen.

6. Lenkrolle nach Anspruch 5, bei der der Höcker (20) in einem mit der Blattfeder einstückig ausgeführten hervorstehenden Teil (19) der Blattfeder (15), das zwischen den beiden Zinken (18) vorsteht, geformt ist.

7. Lenkrolle nach Anspruch 4, bei der die Blattfeder (35) an einem von dem Pedal (24) entfernten Ende auf die Gabel (42) gegenwirkt und der Höcker (40A, 40B) zwischen diesem Ende und dem Pedal (24) in der Blattfeder (35) geformt ist.

8. Lenkrolle nach Anspruch 7, bei der der Höcker einer von einem Paar solcher Höcker (40A und 40B) ist, die symmetrisch auf beiden Seiten der Längsachse der Blattfeder (35) in die Blattfeder (35) geformt sind.

9. Lenkrolle nach Anspruch 8, bei der der Teil der Blattfeder (35), der auf die Gabel (42) an diesem Ende gegenwirkt, und die zwei Höcker (40A und 40B) um einen ringförmigen Teil der Blattfeder (35) herum in Umfangsrichtung beabstandet sind, wobei der ringförmige Teil eine zentrale Öffnung hat, durch die die Achse der Nabenanordnung (13) geht.

10. Lenkrolle nach einem der Ansprüche 1 bis 9, bei der das Widerlager in einem Lösehebel (29, 39) geformt ist, der drehbar an der Gabel (12, 42) angebracht ist und der durch die Wirkung der gespannten Blattfeder (15, 35), die über das Strebenelement (25) wirkt, das mit dem Widerlager in Eingriff ist, in Anlage mit der Gabel (12, 42) gedrückt wird, wobei die Anordnung so ist, daß der Lösehebel (29, 39) relativ zur Gabel (12, 42) gedreht werden kann, um das Strebenelement (25) aus dem Eingriff mit dem Widerlager herauszunehmen und dadurch die gespannte Blattfeder (15, 35) zu lösen, so daß sie sich in ihre natürliche, ebene, entspannte Lage zurückbewegt.

11. Lenkrolle nach Anspruch 10, bei der der Lösehebel (29, 39) ein Sekundärpedal ist.

12. Lenkrolle nach Anspruch 10 oder 11, bei der der Lösehebel (29) auf einem von einem Seitenteil der Gabel (12) getragenen Drehzapfen (17) schwenkbar angebracht ist und in Anlage mit einer Oberfläche des Brückenteils der Gabel (12) durch die Wirkung der gespannten Blattfeder (15) gedrückt ist, die über das Strebenelement (25) wirkt, das mit dem Widerlager in Eingriff ist, wobei der Drehzapfen (17) in einer korrespondierenden Vertiefung (31) sitzt, die im Lösehebel (29) so geformt ist, daß sie auf einer Seite offen ist, wobei die Anordnung so ist, daß der Drehzapfen (17) aus der entsprechenden Vertiefung (31) durch eine Schwenkbewegung des Lösehebels (29) um diese Oberfläche der Gabel (12) gelöst wird, wodurch das Strebenelement aus dem Eingriff mit dem Widerlager entfernt werden kann, und dadurch die gespannte Blattfeder (15) für die Rückkehr in ihre natürliche, ebene, entspannte Lage freigegeben wird, wobei der Lösehebel (29) in seine normale Lage in Anlage mit der Oberfläche und während der Drehzapfen (17), in der entsprechenden offenseitigen Vertiefung (31) sitzt als Folge der Wirkung der Blattfeder (15), wenn sie ihre normale, ebene, entspannte Lage zurückkehrt, zurückgestellt wird.

13. Lenkrolle nach Anspruch 10 oder 11, bei der der Lösehebel (39) an dem Brückenteil der Gabel (42) durch die Verbindung von Gelenkelementen (44), die vom Lösehebel (39) aus durch entsprechende im Brückenteil gebildete Öffnungen (45) hervorstehen, angelenkt ist.

FIG.1

FIG.2

EP 0 259 131 B1

FIG.3

FIG.4

FIG.5

FIG.7

FIG.8

FIG.6

EP 0 259 131 B1

FIG.9

EP 0 259 131 B1

FIG.11

FIG.10